# EUROPEAN PATENT APPLICATION

(11) **EP 1 998 121 A2**
(43) Date of publication of application: **03.12.2008**
(21) Application number: 08157092.1
(22) Date of filing: 28.05.2008
(51) Int. Cl.: F24J 2/46, F24J 2/04, F24D 17/00

(54) **Balustrade with integrated thermal absorber for hot water production**

(30) Priority: 28.05.2007 IT RM20070292
(71) Applicant: Artindustria S.r.l., 66040 Altino CH (IT)
(72) Inventor: Lorenzi, Mario, 66041, Atessa CH (IT)
(74) Representative: Papa, Elisabetta

(57) **Abstract**

System for extracting thermal energy from solar radiation by an installation comprising one or more solar collectors (30) integrated inside a balustrade (3) for production of hot water (200), in conjunction with the utmost architectural integration. The system allows the extracting of energy from the sun by an absorber element (5) of any kind and complying with the type of energy extracted, attained by means of integration inside a balustrade (3).

## Description

The present invention refers to a system for extracting thermal energy from solar radiation.

### History of the technology

To date, the solar-powered system, or "solar collector" system, emerges among the by far most economical solutions for heat production.

In the last few years, technology for the thermal use of energy in the form of solar radiation has achieved maturity and reliability such as to place it among the most rational and clean ways to heat water, mainly for household use.

Despite its scarce density (reaching 1 kW/m² on clear sky days), solar radiation remains the most abundant energy source on Earth surface.

A solar-powered system for hot water production is constituted by various units, each having a specific function:
- one or more solar collectors,
- a reservoir tank, and
- a hydraulic circuit.

A solar collector functions substantially as heat generator and comprises a solar absorber, constituted by a black collecting plate, inside which a pipe bundle is inserted in which a thermal carrier fluid flows. The absorber, thanks to specific treatments operated onto its surface, filters the infrared component of the solar radiation, component which operates the heating of the thermal carrier fluid. The pipe bundle can be made of materials endowed with excellent heat transmittance, like e.g. sheet metal, aluminium or copper. The assembly constituted by absorber and pipe bundle is usually enclosed in a container having a glazed surface in which it is present an insulating material, like e.g. glass wool or polyurethane.

The container, or frame, is usually made of aluminium or synthetic material, consistent sturdiness and stability to the collector. The insulating material present therein limits its thermal losses. The glazed surface allows solar radiation to reach the absorber, maximally preventing possible refractions.

The thermal carrier fluid is generally additioned with anti-freeze in order not to freeze up during winter season (usually glycolated water is employed).

The solar collector is connected to a hydraulic circuit which has the function of carrying the thermal carrier fluid inside a reservoir tank, or boiler, containing sanitary water to be heated.

As to the hydraulic circuit, currently there are two operating options: the first one relative to a "forced circulation" system, the second one to a "natural circulation" system. The forced circulation system substantially implies the use of a circulation pump and an electronic control unit regulating the pump starting and stopping on the basis of the temperature difference, detected by suitable probes, between the thermal carrier fluid at the collector outlet and the sanitary water held inside the boiler. In the natural circulation system, instead, the motion of the thermal carrier fluid inside the circuit is induced by the heating of the fluid itself. As it is known, in fact, the hot fluid by being - volumes being equal - lighter than the cooler fluid, tends to rise, thereby inducing a circulation which then fosters heat conveyance to the sanitary water inside the boiler.

The natural circulation system is, as it is obvious, much less complex than the forced circulation system, and therefore less expensive, as it can do without components such as the circulation pump and the control unit. However, by having no regulation option whatsoever, the natural circulation system is much less performing: for instance, the fluid flow rate cannot be adjusted and, therefore, the heat transfer occurring both in the absorber and in the boiler cannot be optimized. Moreover, the boiler location should be higher and as near as possible to the solar collector, and, if the latter is located outside, stored energy is not efficiently maintained, as it tends to be dissipated into the environment owing to possible bad weather and sudden changes in temperature between day and night.

Besides the above-described type of solar collectors, to date on the market there is a further typology: the "vacuum" solar collectors. They are expressly made to limit heat dissipation to the outside. They appear as glass pipes containing a heat-absorbing element and a thermal carrier fluid, inside which air pressure is greatly reduced, in a manner such as to limit just heat dissipation. For the remainder, the heating system employing this type of collectors is in all similar to the one described above, be it of forced circulation or of natural circulation type.

The continuous development of the technology of solar collector systems, in conjunction with the ever-increasing cost of energy, favour solar energy, which offers the indisputable advantage of being inexhaustible and entailing no emission of noxious substances.

These systems, even better when coupled to a conventional-type hot water production system, demonstrated a high efficiency all year long, being capable of running even at very low temperatures.

### Drawbacks of the prior art

Despite the numerous advantages offered by a heating system exploiting solar radiation as energy source, the solutions adopted to date for the assembling of solar collectors entail numerous drawbacks.

In fact, collectors are usually assembled so as to give them a tilt such as to follow more or less optimally the pattern of the solar path, both in winter and in summer.

For this reason the collectors may be installed on the roof, or freely positioned (e.g., in the garden) when equipped with suitable assembling structures, ground-located in order to give them a determined tilt degree.

However, these installations are extremely bulky, markedly penalizing the aesthetical appearance of the roof or the dwelling in general. Some attempts at architectural optimization do no more than fastening the solar collectors on walls or vertical façades, or under tiles; yet, these solutions, though entailing a small aesthetical improvement, surely imply remarkable technical difficulties for their implementation moreover, with these types of installation not everyone can make use of such a system, as its installation requires a space not always available.

### Technical problem solved by the invention

Hence, the technical problem solved by the present invention is to overcome the above-mentioned drawbacks. This is obtained by providing a system according to claim 1.

Further features of the system are defined in the corresponding dependent claims thereof.

### Advantages of the invention

The present invention, by overcoming the mentioned problems of the known art, provides numerous and evident advantages.

In a preferred embodiment, the system subject-matter of the present invention provides the use of one or more solar absorbers vertically housed inside a safety balustrade firmly fastened to the balcony floor.

With the innovative system subject-matter of the present invention, it is achieved a reasonable production of hot water (as the collectors might not be always optimally oriented toward the solar path) assuring however the utmost architectural integration.

Should a forced circulation hydraulic circuit be used, the system subject-matter of the present invention could provide the integration of all the regulation and safety devices inside the balustrade structure.

A further advantage of the present invention is to give owners of numerous dwelling units the opportunity to make use of a solar-powered system even in case no sufficient space is available for connectors assembling, or no owned pitches/cover terraces are available.

### Brief description of the drawings

Still further advantages, as well as the features and the operation steps of the present invention, will be made evident in the following detailed description of a preferred embodiment thereof, given by way of example and not for limitative purposes. Reference will be made to the figures of the annexed drawings, wherein:
figure 1 depicts a front view of a member of the system subject-matter of the present invention, according to a preferred embodiment thereof;
figure 1A shows a horizontal section of a detail of the member of figure 1, taken along line A-A thereof;
figure 2 shows a front view of the system subject-matter of the present invention; and
figure 3 shows a front view of a variant of the system subject-matter of the
present invention.

### Detailed description of the drawings

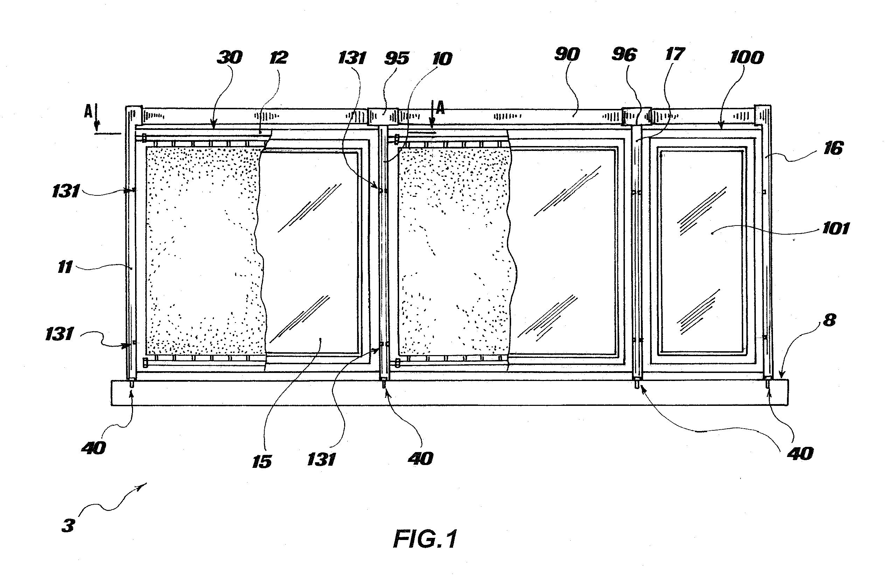

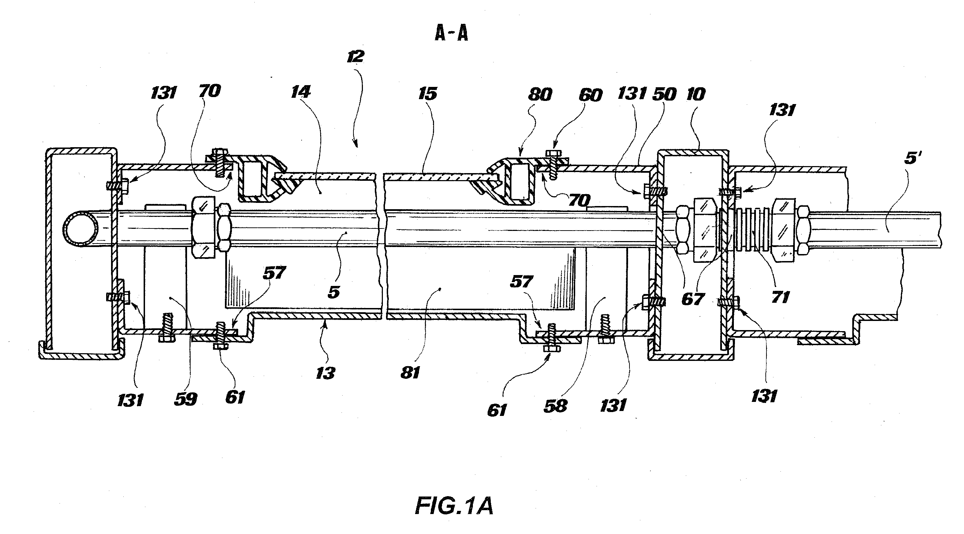

Referring to figure 1, it is shown in a front view a safety member 3, fastened on a floor 8 in correspondence of an external prospect present on a building. In the embodiment shown herein said safety member is made, by way of example and not for limitative purposes, by a balustrade, it also denoted by 3. Said balustrade 3 houses thereinside, in the manner that will be detailed hereinafter, one or more solar absorbers.

In particular, said balustrade 3 comprises a structure for anchoring to said building. Said structure, in the preferred embodiment given here solely by way of a non-limiting example, comprises a first plurality of posts 10, 11, 17, and an end post 16 fastened in correspondence of an end of the external prospect, said posts being vertically fastened on said floor 8 by connecting means 40. Said means 40 could vary, depending on the specific scenery in which said balustrade is installed. In the embodiment shown herein, said posts are anchored onto the floor by means of bolts, them also denoted by 40.

Each pair of consecutive posts of the first plurality, by way of example the posts 10 and 11, are connected by a solar collector 30, fastened thereto by means of fastening screws 131 or equivalent means.

Moreover, it is understood that the number of posts to be assembled of said first plurality, and therefore the number of solar collectors, will vary according to the specific case, e.g. according to the length of the external prospect.

Said solar collector 30 comprises a first outer panel 12, preferably facing the Sun rays, having a plate 15 of high-transmittance material in order to prevent undesired Sun rays reflections. In the embodiment described herein, said plate is made, by way of a non-limiting example, of high-Iron, high-transmittance solar glass. Alternatively, said plate could be made of safety glass, which has lower transmittance than the solar glass, but certainly entails a higher safety, above all in case the prospect of the building overlooks roads where pedestrians go. Therefore, the selection of the material could depend on the specific scenery in which the balustrade is inserted.

The posts of said first plurality 10, 11 and 17 are equispaced thereamong in order to be connected by solar collectors 30, all alike thereamong (as the solar absorbers housed therein have all alike dimensions thereamong), whereas the distance between the end post 16 and the post 17 consecutive thereto will vary according to the specific length of the prospect on which the balustrade 3 is to be installed. In other words, a solar collector 30 could have dimensions excessive or insufficient to connect said end post 16 to the consecutive post 17. Therefore, in this case the posts 16 and 17 are connected by a dummy collector 100, substantially alike the solar collector 30, differing in that no solar absorber is present thereinside. For this reason, the solar glass is preferably replaced by an aluminium panel 101. Therefore, the dummy collector 100, integrated into the balustrade without any aesthetic penalization, has the property of having a length defined according to the specific length of the prospect, in order to assemble the entire balustrade thereon without having composition problems, thereby guaranteeing safety.

The balustrade 3 further comprises a handrail pipe 90, which runs along all of its horizontal development and is fastened at a free end of each vertical post. In particular, in the embodiment shown herein merely by way of example, said handrail pipe is connected to each post by the insertion inside through members 95, each through member fastened to a respective post by means of fastening screws 96 or equivalent means.

Referring to figure 1A, which shows a horizontal section along a plane A-A, said collector 30 comprises a containment frame 50, of substantially U-shaped section, having two opposite vertical frames, each one fastened to a respective post, and two opposite faces (not shown in figure) parallel to the floor 8, assuring the collector closure topwise and bottomwise. In figure 1A it is depicted the section of the vertical faces fastened to the posts 10 and 11 by connecting means 131. By way of example and not for limitative purposes, said containment frame 50 could be fastened to the posts by fastening screws. In particular, each vertical face will be fastened to a respective post by a pair of top screws and a pair of bottom screws (this latter pair not shown in figure).

To said containment frame 50 it is fastened, along all of a free edge 70 thereof, a glass-holding frame 80, in an embodiment given herein by way of example and not for limitative purposes.

The solar glass could also be integrated in a glass-holding frame containing and supporting also the absorber panel and the insulation, all inserted as a single body in the frame 50.

Always referring to the embodiment disclosed herein, said glass-holding frame is fastened to the containment frame, by way of a non-limiting example, by fastening screws 60. To the glass-holding frame it is connected said solar glass plate 15. The glass-holding frame operates with the solar glass a pressure-type connection, but this type of connection is merely exemplary: there might be other connection modes or other technical solutions, whose selection and technical implementation is deemed within the reach of a person skilled in the art. Therefore, the panel 12 comprises the glass-holding frame 80 (which also performs the aesthetical function of solar glass "frame") and the solar glass plate 15.

Always referring to figure 1A, said collector further comprises a cover panel 13. It is fastened to the containment frame 50 along all of a free edge 57 thereof by a connection operated, by way of a non-limiting example, by fastening screws 61.

Said outer panel 12 and cover panel 13, by being fastened to the posts 10 and 11 parallelly therebetween, are such as to define inside the collector 30 a compartment 14.

Inside said compartment 14 it is housed a solar absorber 5, fastened to the balustrade in a vertical position with respect to the floor by means of, by way of a non-limiting example, four fastening (anchoring) clips, of which two positioned bottomwise and two positioned topwise, the latter shown in figure and denoted by reference numbers 58, 59, said clips being in turn bolted to the containment frame 50.

Inside said solar absorber a thermal carrier fluid (not depicted in figure) is apt to flow.

In order to optimize the thermal efficiency of the system 1 subject-matter of the present invention, a thermal insulation mat 81 is placed inside the compartment 14, and precisely between the absorber 5 and the cover panel 13.

Solar absorbers on themselves are well-known in the literature; hence, the technical details related to their technical implementation are deemed to be within the reach of a person skilled in the art, and accordingly will not further be delved into hereinafter.

Always referring to figure 1A, the absorber 5 is connected in series to a consecutive absorber 5'. Therefore, on the post 10 and the containment frame 50 (and generally on any post and containment frame of the balustrade) there are obtained openings 67 to allow passage of the absorber 5 in correspondence of the connection with the successive absorber 5'. In particular, for each absorber there will be obtained, on a respective post, a top opening and a bottom opening (the latter not shown in figure). At the interface of the connection between two successive absorbers (5 and 5' in the exemplary case) it is interposed means for compensating for thermal dilatations, comprising a pair of collapsible thermal joints 71, only one thereof shown in figure.

Should the specific external prospect require a balustrade internally having more than one solar absorber, they, along with the containment frames, will be connected in series to form a battery into which said thermal carrier fluid is apt to flow.

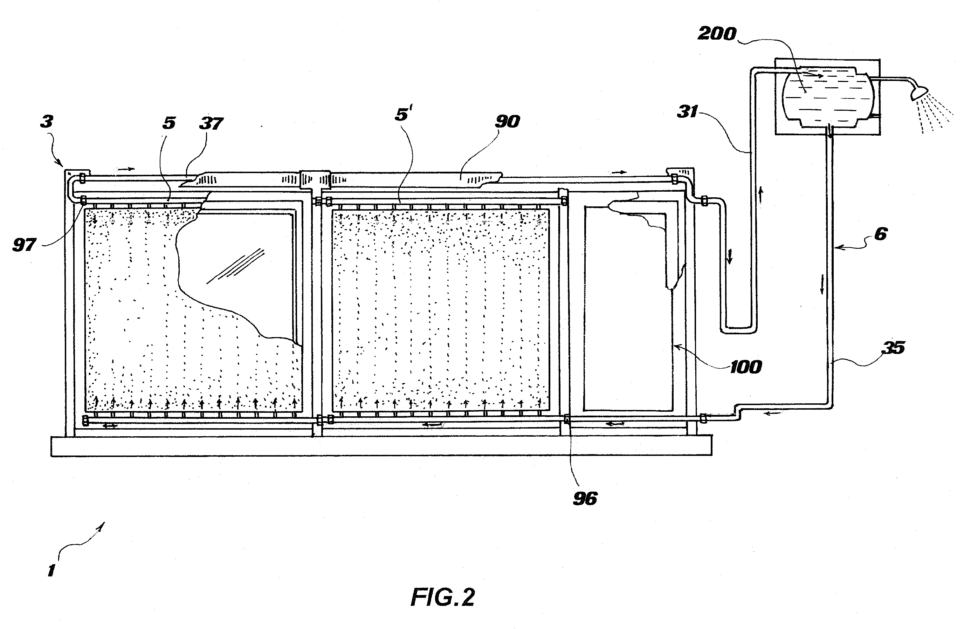

Referring to figure 2, it is shown an embodiment of a system 1 for hot water production, as subject-matter of the present invention. In particular, it is shown a natural circulation hydraulic circuit 6 communicating with the battery constituted by the solar absorbers 5 and 5' connected in series therebetween and housed inside the balustrade 3. Inside said hydraulic circuit it is apt to flow the thermal carrier fluid which is heated up in the transit through said solar absorbers. In particular, said hydraulic circuit comprises a delivery piping 31, a return piping 35, forming a closed circuit with a piping (not shown in figure) housed inside a boiler 200 apt to foster heat conveyance to sanitary water held in said boiler.

The technical solutions to be adopted in order to maximize the efficiency of the thermal exchange between the circuit 6 and said boiler are well-known in the state of the art and deemed to be within the reach of a person skilled in the art, therefore they will not be further delved into hereinafter.

As shown in figure, the return piping 35 is connected to a bottom connection 96 of the absorber 5'. As it is known, the heated thermal carrier fluid will in fact tend to rise (by being lighter than the cooler fluid); therefore the return piping 35 shall necessarily intercept the absorbers in a position located bottomwise with respect to the delivery piping 31. Moreover, to optimize circulation of the thermal carrier fluid inside the absorber battery, the delivery piping 5 has to be connected to the absorber 5 in correspondence of a connection 97 thereof, or in a position opposite to the connection point 96 of the return piping. Hence, a portion 37 of the piping could advantageously be housed inside the handrail pipe 90, which internally is hollow, thereby guaranteeing a further integration of system members into the balustrade 3. Inside the handrail pipe 90 a heat-insulating sheath (not shown in figure) is present, in order to limit undesired thermal dissipation. In case a handrail is installed of a typology such as not to allow the passage therein of said portion 37 of the delivery piping, said portion could alternatively be advantageously housed inside the solar collectors, and in particular said portion will cross in series all the collectors of the balustrade, inside the thermal insulation mats of each solar collector. In this case, suitable holes should be obtained on the posts and containment frames of each collector, in order to allow just the passage of the piping. The technical contrivances for carrying out such a configuration are deemed to be within the reach of a person skilled in the art, therefore they will not be described hereinafter.

In the illustrated case of natural circulation circuit, the dummy collector 100 remains empty thereinside.

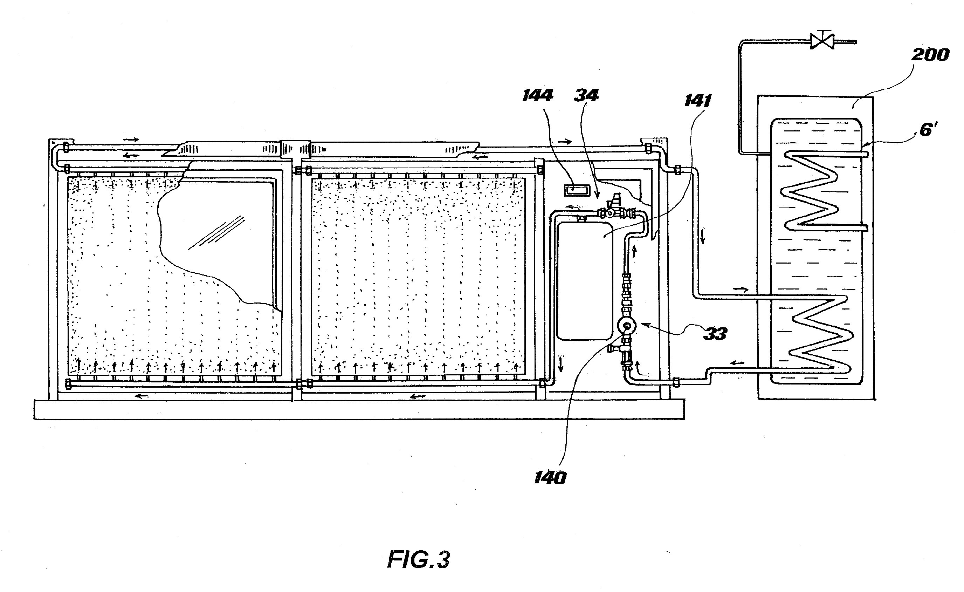

Referring to figure 3, it is shown a variant of the system 1 subject-matter of the present invention, which uses a forced circulation hydraulic circuit.

The system remains in substance alike the aforedescribed one, with the difference that the hydraulic circuit now comprises means 33 for moving the fluid and safety and control means 34.

Always referring to figure 3, in the boiler 200 it is inserted a second ancillary hydraulic (e.g., gas-fed) circuit 6', only partially depicted in figure.

Said moving and control means used in a forced-circulation thermal solar circuit are well known in the state of the art and frequently used; hence, their selection and sizing, depending on the specific case, are deemed to be within the reach of a person skilled in the art and will not be delved into hereinafter. By way of example, said moving means 33 comprises a circulator 140, whereas said safety and control means comprise an expansion vessel 141, as well as an electronic control unit 144 apt to receive and process data sent by probes (not shown in the figure), apt to detect the temperatures of the boiler 200 and of the thermal carrier fluid at the outlet of the solar absorbers, in order to stop or not to stop the circulator operation, or to notice the user with a visual alarm message, should the detected temperatures reach or exceed a safety limit value.

Said means 33 and 34 are positioned along the return piping 35, upstream of the connection 96 of said piping with the absorber 5'. Therefore, as shown in figure, they are advantageously housed inside the dummy collector 100, thus effecting the utmost architectural integration, thereby fostering a greater simplicity in the assembling, in conjunction with a sensible decrease of the dimensions.

The system subject-matter of the present invention also provides a further preferred embodiment (not shown in figure). By varying the mutual position of the bottom and top openings in the posts and in the containment frames through which there occurs the connecting between an absorber and two absorbers successive thereto, in particular by advancing toward the prospect the pair of bottom openings, and withdrawing in the opposite direction the pair of top openings, it is possible to adjust the tilt of the absorber with respect to the containment frame containing it, in order to improve captation of the solar radiation incident thereon.

Were this solution deemed still unsatisfactory, even the same containment frame could be tilted with respect to a plane defined by the respective pair of posts, with a process in all analogous to the hereto-described one. In fact, it is possible to tilt each containment frame by advancing toward the prospect the position of the bottom fastening screws which fasten said frame to the respective pair of posts, and withdrawing in the opposite direction the position of the top fastening screws.

Should this solution be still not enough, also the posts themselves could be fastened in a position tilted with respect to a direction perpendicular to the floor. The technical contrivances needed to fasten the posts onto the floor with a certain degree of tilt are to be deemed within the reach of a person skilled in the art, therefore they will not be discussed hereinafter.

Ultimately, the final tilt of the heat absorbers could then be advantageously determined by suitably adjusting the three relative tilts described above: first tilt of the solar absorbers with respect to the respective containment frames, second tilt of the containment frames with respect to the respective pairs of posts, third tilt of the posts with respect to the vertical to the floor on which they are fastened.

Moreover, it has to be noted that in the above-described balustrade it would likewise be insertable an absorber member, not necessarily solar, suitable e.g. for power production, which absorber member might therefore not necessarily contain a thermal carrier fluid.

The present invention has been hereto described with reference to a preferred embodiment thereof. It is understood that other embodiments might exist, all falling within the concept of the same invention, and all comprised within the protective scope of the claims hereinafter.

## Claims

1. A safety member (3) of balustrade type or the like, apt to be assembled in correspondence of an external prospect of a building or the like on a floor (8), comprising at least one solar absorber (5) apt to contain therein a thermal carrier fluid, said solar absorber (5) being housed inside the safety member (3).

2. The safety member (3) according to claim 1, wherein said safety member (3) comprises a balustrade (3).

3. The safety member (3) according to the preceding claim, wherein said balustrade (3) comprises a structure for anchoring to said building, such structure in turn comprising a plurality of posts (10, 11, 16) apt to be fastened on said floor (8) in correspondence of said external prospect.

4. The safety member (3) according to the preceding claim, wherein said posts are prearranged to be tilted with respect to a vertical to the floor (8).

5. The safety member (3) according to claim 3 or 4, wherein said plurality of posts comprises posts (10, 11) equispaced thereamong.

6. The safety member (3) according to any one of the claims 3 to 5, wherein said plurality of posts comprises an end post (16) apt to be fastened to said building in correspondence of an end of said prospect at a distance from a post (17) adjacent thereto such as to assure the presence of the balustrade along all of the external prospect.

7. The safety member (3) according to the preceding claim, wherein said end post (16) is connected to the post (17) adjacent thereto by a dummy solar collector (100).

8. The safety member (3) according to any one of the claims 3 to 7, wherein the posts of at least one pair of consecutive posts of said plurality (10, 11) are connected by a respective solar collector (30) comprising a respective solar absorber (5).

9. The safety member (3) according to the preceding claim, wherein said solar collector (30) is tilted with respect to a plane defined by the respective pair of consecutive posts.

10. The safety member (3) according to claim 8 or 9, wherein said solar collector (30) comprises an outer panel (12) and a cover panel (13), said panels being apt to define a compartment (14) inside which it is housed said respective solar absorber (5).

11. The safety member (3) according to the preceding claim, wherein said solar absorber (5) is housed inside said compartment (14) in a position tilted with respect to said outer panel (12).

12. The safety member (3) according to claim 10 or 11, wherein said solar absorber (5) is fastened to said cover panel (13) by an anchoring clip (58).

13. The safety member (3) according to any one of the claims 10 to 12, wherein said outer panel (12) comprises a plate (15) made of high-Iron, high-transmittance type material.

14. The safety member (3) according to any one of the claims 10 to 13, wherein said outer panel (12) comprises a plate made of safety glass.

15. The safety member (3) according to any one of the preceding claims, comprising a plurality of solar absorbers (5, 5') connected in series.

16. The safety member (3) according to the preceding claim, wherein at the connection between two consecutive absorbers it is interposed means (71) for compensating for thermal dilatations.

17. The safety member (3) according to the preceding claim, wherein said means comprises a pair of collapsible thermal joints (71).

18. A system (1) for hot water production, apt to be installed in correspondence of an external prospect of a building or the like, comprising:
• a safety member (3) according to any one of the preceding claims; and
• a hydraulic circuit (6) inside which it is apt to flow said thermal carrier fluid, said circuit (6) being connected to said at least one solar absorber (5).

19. The system (1) according to the preceding claim, wherein said circuit (6) comprises a delivery piping (31) housed, at least partially, inside said safety member (3).

20. The system (1) according to claim 18 or 19, wherein said circuit (6) further comprises moving means (33) and adjustment and control means (34) of said thermal carrier fluid.

21. The system (1) according to the preceding claim, wherein said moving means (33) and adjustment and control means (34) are housed inside said safety member.

22. The system according to the preceding claim when dependent from claim 7, wherein said moving means (33) and adjustment and control means (34) are housed inside said dummy collector (100).

23. The safety member (3) according to any one of the claims 18 to 22, wherein said safety member comprises a handrail (90) housing thereinside at least a portion of said hydraulic circuit (6).

24. The system (1) according to any one of the preceding claims, apt to be installed at a balcony or terrace of said building.
